Europäisches Patentamt

(19) European Patent Office

Office européen des brevets

(11) Numéro de publication: **0 227 555 B1**

(12) **FASCICULE DE BREVET EUROPEEN**

(45) Date de publication du fascicule du brevet:
12.09.90

(51) Int. Cl.⁵: **B07B 9/00, C11B 1/04, B02B 3/00, A23N 5/00**

(21) Numéro de dépôt: 86402892.3

(22) Date de dépôt: 22.12.86

(54) Procédé et installation pour le décorticage-triage des graines de tournesol.

(30) Priorité: 23.12.85 FR 8519049

(43) Date de publication de la demande:
01.07.87 Bulletin 87/27

(45) Mention de la délivrance du brevet:
12.09.90 Bulletin 90/37

(84) Etats contractants désignés:
BE DE ES GB IT LU NL

(56) Documents cités:
FR-A- 603 629
FR-A- 1 375 805
US-A- 1 928 241
US-A- 2 002 133
US-A- 2 594 117

REVUE FRANCAISE DES CORPS GRAS,
vol. 29, no. 10, octobre 1982, pages 379-383, Paris, FR; J. EVRARD: "Les perspectives techniques d'évolution pour les tourteaux d'oléagineux aue permet la technologie"
FETTE/SEIFEN/ANSTRICHMITTEL, vol. 83, numéro spécial, 1981, pages 534-540, Münster, Westfalen, DE; Z. LEIBOVITZ et al.: "Die moderne Verarbeitung von Sonnenblumensaat"
JOURNAL OF THE AMERICAN OIL CHEMISTS'

(73) Titulaire: CENTRE TECHNIQUE INTERPROFESSIONNEL DES OLEAGINEUX METROPOLITAINES (C.E.T.I.O.M.), 174, avenue Victor Hugo, F-75116 Paris(FR)

(72) Inventeur: Burghart, Pierre, 7, allée des Vignoles, F-33000 Bordeaux(FR)
Inventeur: Evrard, Jacques, 3, avenue Saint-Hubert, F-33610 Cestas(FR)

(74) Mandataire: Lemoine, Robert et al, Cabinet Malémont 42, Avenue du Président Wilson, F-75116 Paris(FR)

(56) Documents cités: (suite)
SOCIETY,
vol. 57, no. 2, février 1980, pages 55-58, Champaign, US; G.C. MUSTAKAS et al.: "Conversion of soybean extraction plant in Bolivia to production of flours for human consumption: feasibility study"
REVUE FRANCAISE DES CORPS GRAS,
vol. 26, no. 10, octobre 1979, page 416, no. III.37.280, Paris, FR; A. GRIS: "Nouveaux procédés pour le dépelliculage et le triage des graines de colza"

## Description

La présente invention concerne un procédé pour le décorticage-triage des graines de tournesol, consistant à introduire les graines dans un décortiqueur produisant un mélange de particules constituées d'amandes entières ou brisées, de graines partiellement ou non décortiqueées, de coques brisées et de fines d'amandes, et à utiliser un lit fluidisé pour extraire les coques brisées contenues dans le mélange de particules.

La "revue française des corps gras" (vol. 29 No. 10 octobre 1982, pages 379–383) reconnaît que le décorticage des graines de tournesol est pratiqué en huilerie de manière irrégulière et imparfaite.

La plupart des tourteaux de tournesol que l'on trouve actuellement sur le marché contiennent effectivement des graines non décortiquées la présence des coques dans leur composition abaisse toutefois leur teneur en protéines au-dessous de 30%, ce qui ne permet pas de les utiliser comme aliments de base pour l'élevage des porcs charcutiers et des poulets de chair, ces animaux ayant besoin d'une alimentation fortement énergétique.

La présente invention se propose de remédier à ce problème et, pour ce faire, elle a pour objet un procédé pour le décorticage-triage des graines de tournesol, qui se caractérise en ce qu'il consiste à diviser le mélange de particules, avant de l'envoyer sur le lit fluidisé, en deux fractions de granulométrie différente, à extraire au niveau du lit fluidisé les fines d'amandes contenues dans la fraction de granulométrie supérieure avant d'extraire les coques brisées, à réintroduire les fines d'amandes dans la fraction de granulométrie supérieure qui sort du lit fluidisé débarrassée des coques, et à introduire également la fraction de granulométrie inférieure dans la fraction de granulométrie supérieure sortant du lit fluidisé.

Les tourteaux obtenus par la mise en œuvre de ce procédé contiennent deux fois moins de coques qu'un tourteau de graines entières et ont de ce fait une teneur en protéines de l'ordre de 40 à 45%, ce qui les rend donc aptes à servir d'aliments de base pour les porcs et les poulets.

La mise en œuvre de ce procédé est par ailleurs relativement simple et permet de produire des tourteaux à des prix de revient très compétitifs.

De préférence, on divise les particules sortant du décortiqueur en les introduisant dans un trieur comportant un tambour rotatif à paroi latérale perforée.

Les particules les plus petites peuvent ainsi se séparer automatiquement des plus grosses en passant dans les trous ménagés dans la poroi latérale du tambour rotatif.

D'une manière particulièrement avantageuse, on extrait les coques brisées contenues dans la fraction de granulométrie supérieure à l'aide d'au moins une tête d'aspiration disposée au-dessus du lit fluidisé.

Comme les coques sont nettement plus légères que les amandes, on conçoit aisément que ce mode d'extraction permet de les éliminer facilement et en totalité.

On notera ici que les fines d'amandes contenues dans la fraction de granulométrie supérieure peuvent être extraites en disposant une tête d'aspiration supplémentaire au-dessus du lit fluidisé, en amont de la tête d'aspiration prévue pour extraire les coques brisées. Comme ces fines sont plus légères que les coques, la tête d'aspiration prévue pour les extraire doit bien entendu être moins puissante que celle(s) servant à l'extraction des coques.

On notera par ailleurs que la récupération des fines d'amandes permet de diminuer de façon non négligeable la teneur en huile des coques extraites, celes-ci n'étant qu'un sous-produit mal valorisable.

Les essais réalisés lors de la mise. au point du procédé selon la présente invention ont par ailleurs révélé qu'il était préférable que les fractions de granulométrie supérieure et inférieure contiennent des particules ayant des dimensions respectivement supérieures et inférieures à 3,2 mm.

La présente invention concerne également une installation pour la mise en œuvre du procédé de décorticage qui vient d'être décrit, cette installation qui est du type comprenant un décortiqueur apte à produire un mélange de particules constituées d'amandes entières ou brisées, de graines partiellement ou non décortiquées, de coques brisées et de fines d'amandes, un lit fluidisé dont l'entrée est reliée à la sortie du décortiqueur, et au moins une tête d'aspiration disposée au-dessus du lit fluidisé pour extraire les coques brisées contenues dans le mélange de particules, se caractérisé en ce qu'elle comprend en outre un trieur situé entre le décortiqueur et le lit fluidisé et comportant un tambour rotatif ayant une paroi latérale perforée, une première goulotte d'évacuation située sous la paroi latérale du tambour rotatif, une seconde goulotte d'évacuation située sous la sortie du tambour rotatif, une première conduite prévue à la sortie du lit fluidisé pour évacuer les amandes entières ou brisées et les graines partiellement ou non décortiquées, une seconde conduite reliant la première goulotte d'évacuation à la première conduite, une tête d'aspiration supplémentaire disposée au-dessus du lit fluidisé, en amont de la tête d'aspiration précitée et moins puissante qu'elle, pour extraire les fines d'amandes, et une troisième conduite pour introduire dans la première conduite les fines d'amandes extraites par la tête d'aspiration supplémentaire.

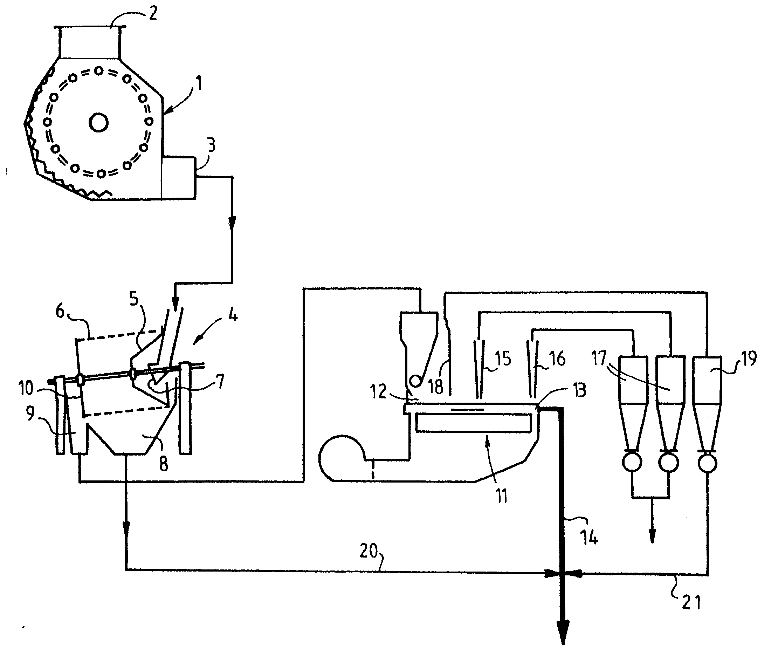

Une installation de décorticage-triage conforme à la présente invention sera maintenant décrite à titre d'exemple nullement limitatif en référence au dessin annexé.

Comme on peut le voir sur ce dessin, l'installation selon la présente invention comprend un décortiqueur 1 ayant une entrée 2 pour l'admission des graines de tournesol à décortiquer et une sortie 3 pour l'évacuation des particules résultant du décorticage, un trieur 4 comportant un tambour rotatif 5 ayant une paroi latérale 6 perforée, ce tambour étant relié par son entrée 7 à la sortie 3 du décortiqueur, une première et une seconde goulottes d'évacuation 8,9 situées respectivement sous la paroi latérale 6 et la sortie 10 du tambour, un lit fluidisé 11 dont l'entrée 12 est reliée à la seconde goulotte d'évacuation 9 et dont la sortie 13 est reliée à une première conduite 14 destinée à évacuer les amandes entières ou brisées et les graines partiellement ou non décortiquées vers un poste de trituration non représenté, deux têtes d'aspiration 15, 16 disposées l'une à la suite de l'autre au-dessus du lit fluidisé 11 pour extraire les coques brisées et les envoyer vers des cyclones 17, et, de là, dans une cellule de stockage non représentée, une tête d'aspiration supplémentaire 18 disposée au-dessus du lit fluidisé 11, en amont des têtes 15, 16, pour extraire les fines d'amandes et les envoyer dans une cuve de récupération 19, une seconde conduite 20 reliant la première goulotte d'évacuation 8 à la première conduite 14, et une troisième conduite 21 reliant la cuve de récupération 19, également à la première conduite 14.

Le décortiqueur 1 est un décortiqueur du commerce choisi parmi ceux qui décortiquent les graines de tournesol sans trop les briser. Le décortiqueur "Ripple Flow" de la société australienne C.S.I.R.O. répond à ces exigences et peut avantageusement être utilisé.

Le trieur 4 comporte un tambour rotatif légèrement incliné de manière à faciliter la progression des plus grosses particules en direction de la seconde goulotte. L'expérience a montré qu'il était préférable que les trous réalisés dans la paroi latérale de ce tambour aient un diamètre de l'ordre de 3,2 mm.

En ce qui concerne le lit fluidisé et les têtes d'aspiration, ils sont de conception classique. Le nombre des têtes d'aspiration prévues pour extraire les coques pourrait bien entendu être différent de 2. Il est par ailleurs souhaitable que la tête d'aspiration prévue pour extraire les fines d'amandes soit moins puissante que celle(s) permettant l'extraction des coques, de manière à ne pas extraire de débris de coques avec les fines.

Pour être complet, on précisera que le mélange provenant des conduites 14, 20 et 21 permet d'obtenir un tourteau titrant 44% de protéines – valeur exprimée en pourcentage de la matière sèche déshuilée – soit un gain de 10 points par rapport au tourteau non décortiqué. On précisera également que la perte en huile dans les coques est inférieure à 1% de l'huile totale des graines.

**Revendications**

1. Procédé pour le décorticage-triage des graines de tournesol, consistant à introduire les graines dans un décortiqueur (1) produisant un mélange de particules constituées d'amandes entières ou brisées, de graines partiellement ou non décortiquées, de coques brisées et de fines d'amandes, et à utiliser un lit fluidisé (11) pour extraire les coques brisées contenues dans le mélange de particules, caractérisé en ce qu'il consiste à diviser le mélange de particules, avant de l'envoyer sur le lit fluidisé (11), en deux fractions de granulométrie différente, à extraire au niveau du lit fluidisé (11) les fines d'amandes contenues dans la fraction de granulométrie supérieure avant d'extraire les coques brisées, à réintroduire les fines d'amandes dans la fraction de granulométrie supérieure qui sort du lit fluidisé (11) débarrassée des coques, et à introduire également la fraction de granulométrie inférieure dans la fraction de granulométrie supérieure sortant du lit fluidisé.

2. Procédé selon la revendication 1, caractérisé en ce qu'on divise les particules sortant du décortiqueur (1) en les introduisant dans un trieur (4) comportant un tambour rotatif (5) à paroi latérale perforée (6).

3. Procédé selon la revendication 1 ou 2, caractérisé en ce qu'on extrait les coques brisées contenues dans la fraction de granulométrie supérieure à l'aide d'au moins une tête d'aspiration (15, 16) disposée au-dessus du lit fluidisé (11).

4. Procédé selon l'une quelconque des revendications précédentes, caractérisé en ce que les fractions de granulométrie supérieure et inférieure contiennent des particules ayant des dimensions respectivement supérieures et inférieures à 3,2 mm.

5. Installation pour le décorticage-triage des graines de tournesol, comprenant un décortiqueur (1) apte à produire un mélange de particules constituées d'amandes entières ou brisées, de graines partiellement ou non décortiquées, de coques brisées et de fines d'amandes, un lit fluidisé (11) dont l'entrée (12) est reliée à la sortie (3) du décortiqueur (1), et au moins une tête d'aspiration (15, 16) disposée au-dessus de lit fluidisé (11) pour extraire les coques brisées contenues dans le mélange de particules, caractérisée en ce qu'elle comprend en outre un trieur (4) situé entre le décortiqueur (1) et le lit fluidisé (11) et comportant un tambour rotatif (5) ayant une paroi latérale perforée (6), une première goulotte d'évacuation (8) située sous la paroi latérale (6) du tambour rotatif (5), une seconde goulotte d'évacuation (9) située sous la sortie (10) du tambour rotatif (5), une première conduite (14) prévue à la sortie (13) du lit fluidisé (11) pour évacuer les amandes entières ou brisées et les graines partiellement ou non décortiquées, une seconde conduite (20) reliant la première goulotte d'évacuation (8) à la première conduite (14), une tête d'aspiration supplémentaire (18) disposée au-dessus du lit fluidisé (11), en amont de la tête d'aspiration (15, 16) précitée et moins puissante qu'elle, pour extraire les fines d'amandes, et une troisième conduite (21) pour introduire dans la première conduite (14) les fines d'amandes extraites par la tête d'aspiration supplémentaire (18).

**Patentansprüche**

1. Verfahren zur Schälung-Trennung von Sonnenblumensaatkörnern, das darin besteht, die Saatkörner in eine Schälvorrichtung (1) einzubringen, die eine Mischung von aus ganzen oder zerbrochenen Kernen, teilweise oder nicht geschälten Saatkörnern, zerbrochenen Schalen und Kernstaub bestehenden Teilchen erzeugt, und ein Fließbett (11) zur Entfernung der in der Teilchen-Mischung enthaltenen zerbrochenen Schalen einzusetzen, dadurch gekennzeichnet, daß es darin besteht, die Teilchen-Mischung vor Überleitung auf das Fließbett (11) in zwei Anteile unterschiedlicher Kornklassierung zu unterteilen, auf dem Fließbett (11) vor Entfernung der zerbrochenen Schalen den im Anteil mit größerer Kornklassierung enthaltenen Kernstaub zu entfernen, den Kernstaub in den das Fließbett (11) nach Schalen-Entfernung verlassenden Anteil mit größerer Kornklassierung wieder einzubringen und den Anteil mit kleinerer Kornklassierung in den das Fließbett (11) verlassenden Anteil mit größerer Kornklassierung auch einzubringen.

2. Verfahren nach Anspruch 1, dadurch gekennzeichnet, daß man die die Schälvorrichtung (1) verlassenden Teilchen unterteilt, indem sie in eine Trennvorrichtung (4) eingebracht werden, die eine Drehtrommel (5) mit durchlöcherter Seitenwand (6) aufweist.

3. Verfahren nach Anspruch 1 oder 2, dadurch gekennzeichnet, daß man die in dem Anteil mit größerer Kornklassierung enthaltenen, zerbrochenen Schalen mittels wenigstens einem Ansaugkopf (15, 16) entfernt, der über dem Fließbett (11) angeordnet ist.

4. Verfahren nach irgendeinem der vorhergehenden Ansprüche, dadurch gekennzeichnet, daß die Anteile mit größerer und kleinerer Kornklassierung Teilchen enthalten, die Abmessungen über bzw. unter 3,2 mm aufweisen.

5. Vorrichtung zur Schälung-Trennung von Sonnenblumensaatkörnern mit einer Schälvorrichtung (1) zur Erzeugung einer Mischung von aus ganzen oder zerbrochenen Kernen, teilweise oder nicht geschälten Saatkörnern, zerbrochenen Schalen und Kernstaub bestehenden Teilchen, mit einem Fließbett (11), dessen Einlaß (12) mit dem Auslaß (3) der Schälvorrichtung (1) verbunden ist, und mit wenigstens einem Saugkopf (15, 16), der zur Entfernung der in der Teilchenm-Mischung enthaltenen, zerbrochenen Schalen über dem Fließbett (11) angeordnet ist, dadurch gekennzeichnet, daß sie außerdem aus einer Trennvorrichtung (4) besteht, die zwischen der Schälvorrichtung (1) und dem Fließbett (11) liegt und eine Drehtrommel (5) mit einer durchlöcherten Seitenwand (6) umfaßt sowie eine erste, unter der Seitenwand (6) der Drehtrommel (5) befindliche Austragrutsche (8) und eine zweite, unter dem Auslaß (10) der Drehtrommel (5) befindliche Austragrutsche (9), aus einer ersten Leitung (14), die zum Austragen der ganzen oder zerbrochenen Kerne und der teilweise oder nicht geschälten Saatkörner am Ausgang (13) des Fließbetts (11) vorgesehen ist, aus einer zweiten Leitung (20), die die erste Austragrutsche (8) mit der ersten Leitung (14) verbindet, aus einem zusätzlichen Saugkopf (18), der zur Entfernung des Kernstaubs über dem Fließbett (11), oberhalb des obengenannten Saugkopfes (15, 16) angeordnet ist und weniger leistungsfähig als dieser ist, und aus einer dritten Leitung (21) zur Einbringung des über den zusätzlichen Saugkopf (18) entfernten Kernstaubs in die erste Leitung (14).

## Claims

1. A method of hulling-separating sun flower seeds comprising feeding the seeds into a huller (1) which produces a mixture of particles made of full or broken kernels, partially hulled or non-hulled seeds, broken hulls and kernel fines, and using a fluidized bed (11) to remove the broken hulls from the mixture of particles, characterized in that it comprises dividing the mixture of particles into two fractions of different grain size, before feeding thereof onto the fluidized bed (11), removing the kernel fines from the larger grain size fraction at the fluidized bed (11), before removing the broken hulls, feeding the kernel fines back into the larger grain size fraction issuing hull free from the fluidized bed (11), and further feeding the smaller grain size fraction into the larger grain size fraction from the fluidized bed.

2. The method according to claim 1, characterized in that the particles from the huller (1) are divided by feeding thereof into a separator (4) comprising a rotary drum (5) having a perforated side wall (6).

3. The method according to claim 1 or 2, characterized in that the broken hulls in the larger grain size fraction are removed using at least one suction head (15, 16) which is arranged above the fluidized bed (11).

4. The method according to any preceding claim, characterized in that the larger and smaller grain size fractions comprise particles having dimensions larger and smaller than 3.2 mm, respectively.

5. A plant for hulling-separating sun flower seeds comprising a huller (1) operable for producing a mixture of particles made of full or broken kernels, partially hulled or non-hulled seeds, broken hulls and kernel fines, a fluidized bed (11) having the inlet thereof connected to the outle (13) of the huller (1), and at least one suction head (15, 16) which is arranged above the fluidized bed (11) for removing the broken hulls from the mixture of particles, characterized in that it further comprises a separator (4) located between the huller (1) and the fluidized bed (11) and comprising a rotary drum (5) having a perforated side wall (6), a first discharge chute (8) located beneath the side wall (6) of the rotary drum (5), a second discharge chute (9) located beneath the outlet (10) of the rotary drum (5), a first duct (14) provided at the outlet (13) of the fluidized bed (11) for discharging the full or broken kernels and the partially hulled or non-hulled seeds, a second duct (20) connecting the first discharge chute (8) to the first duct (14), a further suction head (18) which is arranged above the fluidized bed (11) upstream from said at least one suction head (15, 16) and has a lower power rating than the latter, for removing the kernel fines, and a third duct (21) for feeding the kernel fines removed by said further suction head (18) into the first duct (14).